# FASCICULE DE BREVET EUROPEEN

(11) **EP 2 188 107 B1**
(45) Date de publication et mention de la délivrance du brevet: **21.12.2011**
(21) Numéro de dépôt: 08836240.5
(22) Date de dépôt: 09.09.2008
(51) Int. Cl.: B29C 49/66, B29C 49/78, B29C 49/12, B29C 49/36, B29C 49/06

(54) **Procédé de formation de récipients et machine pour sa mise en oeuvre**
Verfahren zur Formung von Behältern sowie Vorrichtung zur Durchführung des Verfahrens
Process for forming containers and apparatus for it

(30) Priorité: 10.09.2007 FR 0706326
(43) Date de publication de la demande: 26.05.2010
(73) Titulaire: Sidel Participations, 76930 Octeville Sur Mer (FR)
(72) Inventeur: DERRIEN, Mikael, F-76930 OCteville S/Mer (FR); PROTAIS, Pierrick, F-76930 OCteville S/Mer (FR)
(74) Mandataire: Cabinet Plasseraud
(86) Numéro de dépôt international: PCT/FR2008/051603
(87) Numéro de publication internationale: WO 2009/044067

(56) Documents cités:
- EP-A- 0 406 146
- EP-A- 1 518 658
- DE-A1-102004 014 653
- FR-A- 2 881 979
- US-A- 4 091 059

## Description

La présente invention concerne, de manière générale, le domaine de la formation de récipients en matériau thermoplastique à partir d'ébauches, tels que des préformes en PET, par un processus d'étirage-soufflage.

L'invention s'applique notamment aux machines d'étirage-soufflage de type rotatif comportant plusieurs postes de soufflage qui sont montés à la périphérie d'un carrousel.

Chaque poste de soufflage comporte, notamment, un moule de soufflage, un dispositif de soufflage (incluant en général une tuyère de soufflage) et un dispositif d'étirage. Selon un mode de réalisation possible, le moule de soufflage est du type portefeuille, c'est-à-dire qu'il comporte deux parties s'ouvrant par écartement en pivotant autour d'un axe commun.

De manière courante, afin de former un récipient, on place une ébauche, préalablement chauffée à une température de ramollissement, dans un moule de soufflage qui porte l'empreinte du récipient à obtenir. Une tuyère de soufflage est mise en communication avec l'ouverture de cette ébauche et un fluide de soufflage est injecté sous haute pression pour plaquer la matière de l'ébauche contre les parois de la cavité du moule de soufflage.

Afin de faciliter la formation du récipient et le placage de la matière thermoplastique contre la surface interne de la cavité de moulage lors du soufflage, il est prévu qu'une tige vienne étirer l'ébauche dans le moule de soufflage et l'appuyer contre la paroi de fond de l'ébauche.

Comme cela est ainsi plus précisément illustré dans le document FR 2 764 544 au nom de la Demanderesse, la tige d'étirage est conventionnellement introduite dans l'ouverture (le col) de l'ébauche à étirer et à souffler. Cette tige coulisse axialement dans l'axe longitudinal de la tuyère de soufflage, un espace annulaire étant laissé libre pour permettre le passage du fluide de soufflage.

Il est connu de l'homme du métier que le soufflage n'est pas réalisé in abstracto, mais que les opérations effectuées lors du soufflage ainsi que les paramètres de la machine (tels que la température du moule) dépendent de l'utilisation prévue du récipient. Les paramètres de réglage de la température du moule dépendent, notamment dans le cas de récipients conçus pour le remplissage à chaud « hot fill », de la température du liquide de remplissage desdits récipients.

Ainsi, les applications dont la température de remplissage ou de rinçage est inférieure à la température de transition vitreuse du PET ne nécessitent pas de température de moule supérieure à 72°C.

Dans ce cas, la température du moule a pour fonction de figer le plus rapidement possible la forme du récipient, laquelle température étant, par exemple, de l'ordre de 10°C. Cette température du moule sera, par exemple, de l'ordre de 65°C pour obtenir un retrait du volume du récipient, en sortie de machine, qui soit quasi identique au retrait obtenu après un vieillissement naturel dudit récipient.

En revanche, d'autres applications nécessitent que le moule soit réchauffé de façon importante. Ainsi, le remplissage à chaud, hot fill, (par exemple avec des liquides tels que du thé, jus de fruit pasteurisé, etc.) ou encore la pasteurisation du contenu suppose que l'on chauffe le moule à une température prédéterminée, afin d'effectuer une thermofixation de la matière, comme décrit dans le document FR2649035.

Le moule est mis en température (refroidissement ou réchauffage) par une circulation d'un fluide caloporteur (eau ou huile chaude dans le cas du chauffage) dans des canalisations ménagées dans la paroi dudit moule, autour de la cavité de moulage.

Cependant, lors de la mise en route de la machine d'étirage-soufflage, la température des moules est comprise entre 120 et 160°C tandis que celle des ébauches est d'environ 120°C.

De ce fait, lors des premiers cycles de soufflage de préformes dans les moules, la mise en contact de la matière soufflée constitutive de l'ébauche tend à refroidir la peau de la cavité de moulage (c'est-à-dire la surface externe de la cavité de moulage correspondant aux premiers millimètres en profondeur de la surface interne de la cavité de moulage). Cette température de la peau de la cavité de moulage se stabilise après plusieurs cycles de soufflage et donc après plusieurs mises en contact de la matière ramollie soufflée de l'ébauche sur la cavité de soufflage.

Ainsi, les premiers récipients soufflés dans une moule de soufflage ne le sont pas à une température constante du moule, ce qui aboutit, in fine, à des récipients présentant des capacités volumiques différentes.

D'une manière générale, le volume final de la bouteille, en sortie de la machine de soufflage, est inférieur au volume de l'empreinte du moule. Mais la température du moule a une influence sur le volume final de la bouteille. En effet, plus le moule est froid, et plus le volume de la bouteille est grand.

Il a ainsi pu être constaté des écarts volumiques des récipients formés par un même moule de soufflage variant entre 0,5 et 3% entre le moment où le moule de soufflage est mis en marche et le moment où la température de la peau de la cavité de moulage est stabilisée.

Or, du fait de cet écart volumique de récipients, et après son remplissage avec un contenu qui est à volume constant, il est obtenu un volume vide d'oxygène plus ou moins grand à l'intérieur des récipients remplis, d'où des risques d'oxydation plus grands du contenu. Il est en effet souhaité de diminuer au maximum le volume vide d'air contenu dans un récipient, une fois que celui-ci a été rempli avec une quantité constante d'un contenu. De ce fait, il est nécessaire d'obtenir des récipients avec un volume interne le plus précis possible pour ainsi réduire au maximum la quantité d'oxygène susceptible de se trouver dans le récipient, après que celui-ci a été rempli et bouché.

De plus, avec un volume d'oxygène plus grand contenu dans le récipient bouché, le phénomène de vide qui doit être compensé par la bouteille, après son remplissage et son bouchage, est plus grand, ce qui est susceptible d'aboutir à une déformation du récipient et donc à un récipient rempli ne pouvant être mis sur le marché.

Ces récipients, dont le volume de contenant est variable et dont le volume de contenu est fixe, présentent une variation de niveau de remplissage, laquelle variation peut laisser penser, aux consommateurs non avertis, que certains récipients ne contiennent pas le bon volume de contenu.

Par ailleurs, il n'est également pas envisageable, compte tenu des cadences de production actuelle, de plus en plus élevées pour la fabrication de récipients, de mettre au rebut les premiers récipients formés jusqu'à la stabilisation des caractéristiques dimensionnelles du récipient.

Le problème se pose d'autant plus que les machines d'étirage-soufflage sont souvent intégrées dans des installations plus importantes et plus complètes dans lesquelles il est prévu aussi bien des machines en amont (par exemple le four de conditionnement des préformes) que des machines en aval (par exemple des remplisseuses de liquide ou des étiqueteuses), ce qui entraîne un risque plus élevé qu'une de ces machines présente un dysfonctionnement et qu'il soit nécessaire d'arrêter l'ensemble des machines, pour la réparer. Les arrêts machines sont donc potentiellement plus fréquents, et il n'est pas envisageable, d'un point de vue purement financier, de mettre au rebut une partie de la production afin d'attendre que la température des moules de soufflage se soit stabilisée.

Il est donc particulièrement intéressant de réaliser un procédé de fabrication de récipients grâce auquel il est possible d'obtenir une meilleure stabilisation dimensionnelle du volume du récipient, et ce dès les premiers instants de la mise en fonctionnement des moules de soufflage.

Le document DE 10 2004 014653 décrit un procédé de formation de recipient à partir d'une ébauche.

Le document FR2881979 propose un procédé de commande d'une machine de soufflage de récipients visant à corriger certaines anomalies, comme la répartition de matière. Des moyens sont mis en oeuvre pour contrôler en continu, pendant la production, l'épaisseur de la paroi des récipients qui sortent des différents moules.

Dès qu'une dérive apparaît, elle est analysée et, selon le cas, l'opérateur, ou le système de commande, peut intervenir pour modifier un ou plusieurs des paramètres de la recette de façonnage des récipients.

Cette intervention est effectuée a posteriori, pendant la production des récipients.

La présente invention permet d'intervenir dès le début de la production pour éviter les rebuts liés à la phase de démarrage de la machine de soufflage, lesquels rebuts portent tout de même sur plusieurs centaines de récipients.

La présente invention porte sur un procédé de formation de récipients à partir d'une ébauche, préférentiellement une préforme, en matériau thermoplastique, selon la revendication 1.

Toujours selon l'invention, le procédé comprend une étape de fixation d'une valeur du temps Td de balayage qui est utilisée pour le premier tour du carrousel de la machine de soufflage

Selon une autre disposition de l'invention, le procédé comprend une étape de fixation de la durée de la période de compensation, laquelle durée, ou temps Tc de compensation est de l'ordre de quelques minutes, c'est-à-dire un temps suffisant pour que les évolutions dimensionnelles des récipients soufflés deviennent négligeables, voire nulles.

Toujours selon l'invention, le procédé consiste à programmer une variation de la durée Tb du temps de balayage, pendant la période de compensation, selon une fonction du premier degré du type : Tb = A.t + Td lorsque t ≤ Tc et où A est un coefficient qui donne la pente de la courbe de compensation et, ensuite, lorsque t > Tc, la durée du temps de balayage est constante : Tb = A.Tc + Td.

Selon une disposition préférentielle de l'invention, le coefficient A est de l'ordre de ±0,0003 à ±0,0006 ; il est négatif lorsque la température des moules diminue pendant la période Tc de compensation et il est positif lorsque la température augmente pendant ladite période Tc de compensation.

Toujours selon l'invention, le procédé consiste à réaliser, pendant la période de compensation, une évolution automatique de la durée du temps de balayage, de façon incrémentielle, à chaque tour, par exemple, du carrousel de la machine de soufflage-étirage.

L'invention concerne également l'installation, et en particulier la machine de soufflage-étirage qui permet de mettre en oeuvre le procédé détaillé auparavant, selon la revendication 7.

Toujours selon l'invention, la machine comprend des moyens, au niveau de l'automate, pour faire varier la durée du temps Tb de balayage de façon incrémentielle, à chaque tour de carrousel de la machine, par exemple.

La présente invention est maintenant décrite à l'aide d'un exemple uniquement illustratif et nullement limitatif de la portée de l'invention, et à partir des figures suivantes, dans lesquelles :

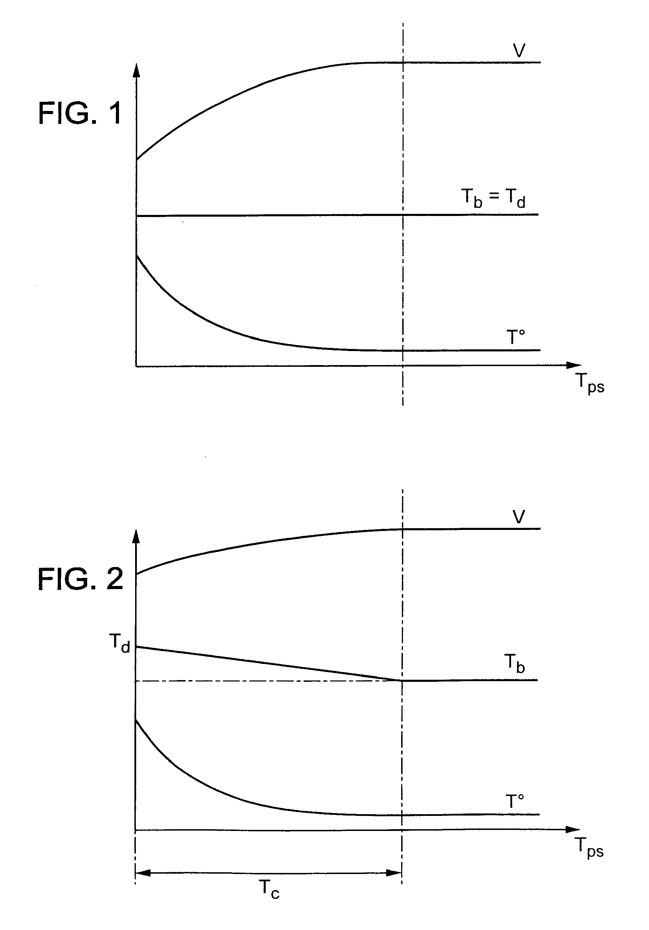

- la figure 1 illustre l'état de la technique de manière figurative, et en particulier les variations - du volume V des récipients formés, - du temps Tb de balayage et - de la température T° du moule de soufflage, à compter de la mise en marche de la machine et au cours de la production des récipients, dans le cas d'une fabrication qui voit baisser la température du moule pendant les premières minutes de fabrication desdits récipients,
- la figure 2 illustre, de la même manière, les variations - du volume V des récipients formés, - du temps Tb de balayage et - de la température T° du moule de soufflage, pour une machine de soufflage-étirage fonctionnant selon le procédé de l'invention,

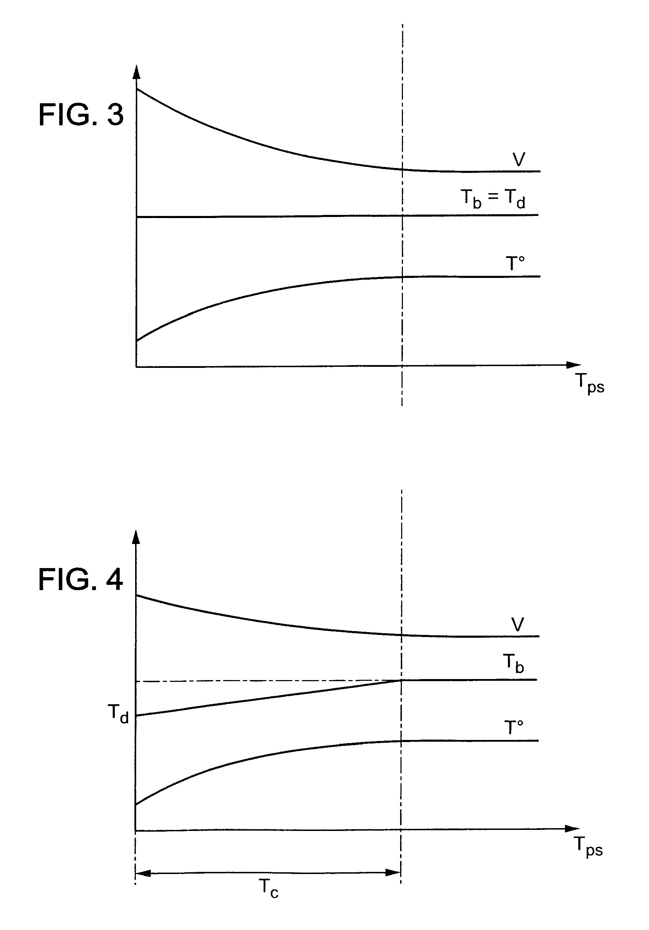

- la figure 3 illustre également l'état de la technique et, comme précédemment, les variations - du volume V des récipients formés, - du temps Tb de balayage et - de la température T° du moule de soufflage, mais dans le cas d'une fabrication qui voit, au contraire, augmenter la température du moule pendant les premières minutes de fabrication desdits récipients,
- la figure 4 illustre, dans le cas de la figure 3, les variations - du volume V du récipient formé, - du temps Tb de balayage et - de la température T° du moule de soufflage, mais pour une machine de soufflage-étirage fonctionnant selon le procédé de l'invention.

La présente invention porte sur l'amélioration d'un procédé de formation de récipients à partir d'une ébauche, préférentiellement une préforme, en matériau thermoplastique, les récipients étant formés à l'aide d'une machine d'étirage-soufflage de type rotatif comprenant au moins un moule de soufflage, monté à la périphérie d'un carrousel entraîné de manière continue autour de son axe, le moule de soufflage fonctionnant de manière cyclique selon un cycle de soufflage comprenant les étapes suivantes :
- une étape de placement d'une ébauche préalablement chauffée dans un moule de soufflage présentant, en position de fermeture, une cavité de moulage formant l'empreinte du récipient à souffler ;
- une étape de fermeture du moule de soufflage ;
- une étape de soufflage de l'ébauche dans le moule de soufflage par l'intermédiaire d'une tuyère de soufflage et, de manière sensiblement simultanée, une étape d'étirage de l'ébauche par insertion d'une tige d'étirage à l'intérieur de l'ébauche en prenant appui contre le fond de l'ébauche de manière à faciliter l'allongement axial de l'ébauche ;
- une étape de balayage de l'intérieur du récipient par injection d'un gaz, et en particulier d'air, à travers une pluralité d'orifices prévus dans la tige d'élongation, afin de refroidir le récipient ;
- une étape de remontée de la tige d'étirage ;
- une étape de saisie du récipient soufflé par des moyens de préhension extérieurs ;
- une étape d'ouverture du moule de soufflage.

Comme cela apparaît plus clairement sur la figure 1, selon l'art antérieur, il est constaté que la température T° d'un moule de soufflage diminue au début de la production des récipients. Cette diminution de la température de la paroi interne du moule, suite à la mise en route de la machine, provient de la mise en contact de la préforme avec ladite paroi interne dudit moule. En effet, dans certains cas de fabrication, comme détaillé auparavant, la matière ramollie de la préforme est plus froide que la température de la paroi de la cavité de moulage du moule de soufflage (voir la courbe du bas de la figure 1).

De manière courante, le temps Tb de balayage est constant tout au long du fonctionnement du moule de soufflage (voir courbe du milieu de la figure 1) ; ce temps Tb de balayage a une valeur Td qui est normalement programmée avant le démarrage de la machine et il est maintenu pour toute la durée de la production des récipients.

La baisse de la température des moules conjuguée avec la stabilité du balayage provoque une dérive dimensionnelle au niveau des récipients, qui se traduit par une augmentation du volume V des récipients formés entre la mise en route du moule de soufflage et le moment où la température du moule s'est stabilisée (voir courbe du haut de la figure 1).

Il a déjà été précédemment indiqué que la variation de volume du récipient formé, entre le début de la production du moule et l'instant où la température du moule est stable, est comprise entre 5 et 10%.

Afin de réduire ce pourcentage de variation de volume, il est proposé, selon l'invention et de manière préférentielle, de faire varier la durée du temps Tb de balayage pendant au moins le temps de stabilisation de la température de la paroi interne du moule de soufflage afin de compenser l'évolution de la température de ladite paroi interne et surtout pour établir, au niveau des différents récipients, une température qui leur permet d'avoir un volume qui prend, dès le départ de la production, une valeur correspondant à la valeur obtenue en production normal lorsque le régime de croisière de la machine est établi et que la température des moules est stabilisée.

En effet, plus le temps Tb de balayage est grand, avec de l'air qui refroidit le récipient, plus le volume V final dudit récipient formé est grand. Il est donc possible, en jouant sur la durée du temps Tb de balayage, d'équilibrer le phénomène de refroidissement du moule de soufflage en début de production qui aboutit à cette augmentation du volume du récipient formé.

Autrement dit, selon le procédé de l'invention, la durée de l'étape de balayage est dépendante du nombre de cycles de soufflage réalisés par le moule de soufflage suite à la mise en marche du premier cycle de soufflage du moule de soufflage, ce grâce à quoi il est tenu compte de la variation de température de la peau de la cavité de moulage du fait de la différence de températures entre la température de la peau de la cavité de moulage et la température de l'ébauche chauffée venant au contact de ladite cavité de moulage lors de l'étape de soufflage, ce qui permet d'aboutir à la fabrication de récipients présentant un volume interne plus stable au cours du temps et, plus particulièrement, lors du début de production du moule de soufflage.

Le procédé selon l'invention, illustré par les résultats, figure 2, comprend donc une étape qui consiste à programmer une période d'évolution temporaire du temps de balayage, c'est-à-dire une période de compensation au cours de laquelle la durée Tb du balayage sera supérieure à la durée qui est celle de la production stabilisée. Cette période Tc de compensation correspond à la période de temps pendant laquelle la température de la cavité de moulage évolue jusqu'à la stabilisation de la température de cette cavité, c'est-à-dire entre le début de la production et le moment où l'on peut parler de régime de croisière pour la machine de soufflage.

Pour ce faire, on détermine tout d'abord, à l'aide d'essais préalables sur la machine d'étirage-soufflage, le temps Tc de compensation, c'est-à-dire le temps durant lequel la température de la peau de la cavité de moulage évolue avant de se stabiliser ; ce temps Tc de compensation est, par exemple, fixé à 180 secondes.

Préférentiellement, le procédé comprend également une étape de fixation de la variation maximale du temps Tb de balayage. A chaque cycle de soufflage, et pendant toute la durée du temps Tc de compensation, la valeur dudit temps Tb de balayage décroît automatiquement, figure 2, pour se stabiliser lorsque la période Tc de compensation est terminée et que la machine tourne en régime de croisière.

Une fois ce temps Tc de compensation déterminé et fixé, on détermine et on fixe un temps Tb de balayage qui tient compte de la valeur affichée Td pour le premier cycle de soufflage, ou le premier tour du carrousel.

Ce durée Tb du balayage évolue avec le temps et elle correspond à l'application, par exemple, d'une simple équation du 1^{er} degré du type Tb = A.t + Td, où Td est le temps de balayage introduit dans l'automate pour le premier tour du carrousel et où A est un coefficient qui dépend des conditions d'utilisation de la machine de soufflage et des récipients à façonner et dont la valeur s'étend de ±0,0003 à ±0,0006 Tc correspond à la durée de la période de compensation et sa valeur varie.

Dans l'équation, t prend une valeur qui évolue, par exemple, de façon incrémentielle entre Tc et zéro ; Tc peut avoir une valeur choisie entre 2 à 3 mn.

L'évolution du temps Tb de balayage peut donc être établie, préférentiellement, avec une variation linéaire pendant le temps Tc de compensation (voir courbe du milieu de la figure 2). Passé ce temps Tc de compensation, le temps Tb de balayage est constant ; il correspond à : A.Tc + Td avec, pour le coefficient A, une valeur négative compte tenu du fait que la température des moules, au départ, est supérieure à celle des préformes et qu'elle diminue au contact de ces dernières avant de se stabiliser.

Les figures 3 et 4 illustrent les variations que l'on peut constater dans le cas d'un façonnage de récipients où la température des moules est inférieure à celle des préformes, c'est-à-dire que les moules s'échauffent et leur température T° évolue au contact des préformes (courbe du bas de la figure 3), ce qui a pour conséquence une diminution du volume V des bouteilles (courbe du haut de la même figure 3) entre le démarrage de la production et le fonctionnement en régime de croisière.

La figure 3 montre ces variations de V et de T° que l'on constate avec l'état actuel de la technique pour lequel le temps de balayage Tb est fixé au départ avec une valeur Td qui reste constante tout au long de la fabrication des récipients.

La figure 4 montre la stabilité du volume V des récipients obtenue par l'application du procédé selon l'invention.

Le temps de balayage Td affiché pour le démarrage de la production des récipients évolue lui aussi par application de la même équation du premier degré, mentionnée plus haut : Tb = A.t + Td avec, dans cette équation, un coefficient A qui est positif.

Au démarrage de la production, le temps de balayage Tb est égal à la valeur Td introduite par l'opérateur dans l'automate, puis ce temps Tb évolue, par incrémentation, à chaque tour de carrousel, par exemple, et, à la fin de la période Tc de compensation, le temps Tb de balayage est égal à : A.Tc + Td avec un coefficient A qui est positif, compris entre 0,0003 et 0,0006.

L'évolution du temps Tb de balayage a aussi une influence sur le temps global du cycle de façonnage des récipients. Dans le cas de la figure 2, le temps Tb de balayage évolue vers une diminution qui permet d'accroître, par exemple, le temps du maintien de la pression de soufflage pendant le régime de croisière.

Ce temps Tb de balayage corrigé est de l'ordre de quelques fractions de seconde ; il varie entre ces quelques fractions de seconde au début de la production des récipients et zéro à la fin de la période Tc de compensation, lorsque la température des moules est stabilisée et lorsque les évolutions dimensionnelles des récipients soufflés deviennent négligeables, voire nulles.

Toutefois, il est également possible de prévoir une variation non linéaire du type, par exemple, du second degré ou autre, pour programmer une évolution de la durée du temps Tb de balayage.

Préférentiellement, la durée du temps Tb de balayage, pendant la période Tc de compensation, est modifiée à intervalles de temps régulier et de façon automatique, et de manière encore plus préférentielle, la durée du temps de balayage, pendant le temps Tc de compensation, est modifiée après chaque tour complet du moule de soufflage sur le carrousel, de façon incrémentielle.

Grâce au procédé selon l'invention, il a pu être obtenu une réduction entre 50 et 75% des variations dimensionnelles du volume interne des récipients formés au cours du temps de compensation du moule de soufflage, c'est-à-dire jusqu'à la stabilisation en température de la cavité de moulage.

## Revendications

1. Procédé de formation de récipients à partir d'une ébauche, préférentiellement une préforme en matériau thermoplastique, les récipients étant formés à l'aide d'une machine d'étirage-soufflage de type rotatif comprenant au moins un moule de soufflage, monté à la périphérie d'un carrousel entraîné de manière continue autour de son axe, le moule de soufflage fonctionnant de manière cyclique selon un cycle de façonnage comprenant les étapes suivantes :
- une étape de placement d'une ébauche préalablement chauffée dans un moule de soufflage présentant, en position de fermeture, une cavité de moulage formant l'empreinte du récipient à souffler,
- une étape de fermeture du moule de soufflage,
- une étape de soufflage de l'ébauche dans le moule de soufflage par l'intermédiaire d'une tuyère de soufflage et, de manière sensiblement simultanée,
- une étape d'étirage de l'ébauche par insertion d'une tige d'élongation à l'intérieur de l'ébauche en prenant appui contre le fond de l'ébauche de manière à faciliter l'allongement axial de l'ébauche,
- une étape de balayage de l'intérieur du récipient par injection d'air pendant un temps Tb donné,
- une étape de remontée de la tige d'étirage,
- une étape de saisie du récipient soufflé par des moyens de préhension extérieurs,
- une étape d'ouverture du moule de soufflage,
**caractérisé en ce qu'**il consiste à mettre en place dans ledit cycle de façonnage des récipients, à chaque début de production des récipients, une période dite « de compensation » au cours de laquelle la durée de ladite étape de balayage varie automatiquement et de façon temporaire pour établir, au niveau desdits récipients, des conditions thermiques permettant de façonner les premiers récipients à une température qui leur donne un volume final correspondant au volume final des récipients façonnés pendant le régime de croisière de ladite machine d'étirage-soufflage, c'est-à-dire la période de production où la température des moules est stabilisée.

2. Procédé de formation de récipients selon la revendication 1, **caractérisé en ce qu'**il comprend une étape de fixation d'une valeur du temps Td de balayage utilisé pour le premier tour du carrousel de la machine de soufflage.

3. Procédé de formation de récipients selon l'une quelconque des revendications 1 ou 2, **caractérisé en ce qu'**il comprend une étape de fixation de la durée Tc de la période de compensation.

4. Procédé de formation de récipients selon la revendication 3, **caractérisé en ce qu'**il comprend une étape de programmation de la variation du temps Tb de balayage, pendant la période Tc de compensation, selon une fonction du premier degré du type Tb = A.t + Td lorsque t ≤ Tc, où A est un coefficient de l'ordre de±0,0003 à ±0,0006 et, ensuite, lorsque t > Tc, le temps Tb de balayage des récipients est constant : Tb = A.Tc + Td.

5. Procédé de formation de récipients selon la revendication 4, **caractérisé en ce que** le coefficient A est positif ou négatif selon que la température des moules évolue au démarrage vers un accroissement ou une diminution, respectivement.

6. Procédé de formation de récipients selon la revendication 5, **caractérisé en ce qu'**il comprend une étape de programmation du mode de variation du temps de compensation, lequel mode consiste en une variation du type incrémentielle, appliquée à chaque tour du carrousel.

7. Machine de soufflage-étirage convenant à la mise en oeuvre du procédé de formation de récipients selon l'une quelconque des revendications 1 à 6, et en particulier machine du type rotatif comprenant au moins un moule de soufflage monté à la périphérie d'un carrousel entraîné de manière continue autour de son axe, ledit moule de soufflage fonctionnant de manière cyclique, laquelle machine comprend un automate de commande et de programmation des cycles de façonnage des récipients qui est muni de moyens de programmation,
**caractérisée en ce que** ledit automate comporte des moyens d'insertion des données: le temps Td de balayage convenant à la période de production stabilisée desdits récipients le temps Tc de compensation temporaire, convenant au début de la production desdits récipients et un coefficient A, lesquelles données convenant à l'établissement automatique et temporaire de la valeur du temps Tb de balayage, laquelle valeur de Tb correspond à l'application d'une équation du type Tb = A.Tc + Td.

8. Machine de soufflage-étirage selon la revendication 7, **caractérisée en ce que** le coefficient A est de l'ordre de ± 0,0003 à ± 0,0006.

9. Machine de soufflage-étirage selon la revendication 7, **caractérisée en ce que** le temps Tc de compensation est de l'ordre de 2 à 3 min.

10. Machine de soufflage-étirage selon l'une quelconque des revendications 6 à 9, **caractérisée en ce qu'**elle comprend des moyens pour faire varier automatiquement, au niveau de l'automate, le temps Tb de balayage pendant le temps Tc de compensation, de façon incrémentielle, à chaque tour de carrousel de ladite machine.

## Claims

1. Process for forming containers from a blank, preferably a preform made from thermoplastic material, the containers being formed using a stretch-blow moulding machine of rotary type comprising at least one blow-moulding mould, mounted on the periphery of a carousel rotated continuously about its axis, the blow-moulding mould operating in a cyclic manner according to a forming cycle comprising the following steps:
- a step of placing a preheated blank in a blow-moulding mould having, in a closed position, a mould cavity forming the cavity of the container to be blow-moulded,
- a step of closing the blow-moulding mould,
- a step of blow-moulding the blank in the blow-moulding mould by means of a blow-moulding nozzle and, approximately simultaneously,
- a step of stretching the blank by insertion of an elongation rod inside the blank, pushing against the base of the blank so as to facilitate the axial stretching of the blank,
- a step of flushing the inside of the container by injection of air for a given time Tb,
- a step of raising the stretching rod,
- a step of grasping the blown container by external gripping means,
- a step of opening the blow-moulding mould,
**characterized in that** it consists of implementing, in said container-forming cycle, a so-called "compensation period" in order to automatically vary, temporarily, the duration of said flushing step, on each start of production of the containers, and in order to establish thermal conditions in said containers allowing the first containers to be formed at a temperature that gives them a final volume corresponding to the final volume of the containers formed during the steady-state operation of said stretch-blow moulding machine, i.e. during the period of production when the temperature of the moulds has stabilized.

2. Process for forming containers according to claim 1, **characterized in that** it comprises a step of setting a value of the flushing time Td used for the first rotation of the carousel of the blow-moulding machine.

3. Process for forming containers according to any one of claims 1 or 2, **characterized in that** it comprises a step of setting the duration Tc of the compensation period.

4. Process for forming containers according to claim 3, **characterized in that** it comprises a step of programming the variation in the flushing time Tb, during the compensation period Tc, according to a first-degree function of the type Tb = A.t + Td when t≤ Tc, where A is a coefficient of the order of ± 0.0003 to ± 0.0006 and, then, when t > Tc, the flushing time Tb of the containers is constant: Tb = A.Tc + Td.

5. Process for forming containers according to claim 4, **characterized in that** the coefficient A is positive or negative depending on whether the temperature of the moulds changes on start-up towards an increase or a reduction, respectively.

6. Process for forming containers according to claim 5, **characterized in that** it comprises a step of programming the variation mode of the compensation time, said mode consisting in a variation of the incremental type, applied to each rotation of the carousel.

7. Stretch-blow moulding machine for implementing the process for forming containers according to any one of claims 1 to 6, and in particular a machine of a rotary type comprising at least one blow-moulding mould mounted on the periphery of a carousel rotated continuously about its axis, the blow-moulding mould operating in a cyclic manner, said machine comprises a programmable logic controller for control and programming of the container-forming cycles of the containers, which is provided with a programmable means, **characterized in that** said programmable logic controller comprises means of entering the following data : the flushing time Td that can be used during the period of stabilized production of said containers, the temporary compensation time Tc for the start of production of said containers and a coefficient A, which data are convenient for automatically and temporarily establishing the value of the flushing time Tb, which value of Tb corresponds to the use of a function of the type Tb = A.Tc + Td.

8. Stretch-blow moulding machine according to claim 7, **characterized in that** the coefficient A is of the order of ± 0.0003 to ± 0.0006.

9. Stretch-blow moulding machine according to claim 7, **characterized in that** the compensation time Tc is of the order of 2 to 3 min.

10. Stretch-blow moulding machine according to any one of claims 6 to 9, **characterized in that** it comprises means of automatically incrementally varying, in the programmable logic controller, the flushing time Tb during the compensation time Tc, on each rotation of the carousel of said machine.

## Patentansprüche

1. Verfahren zur Formung von Behältern aus einem Rohling, vorzugsweise einem Rohling aus Thermoplast, wobei die Behälter mit Hilfe einer Streck-Blas-Maschine drehbaren Typs geformt werden, umfassend mindestens eine Blasform, die an der Peripherie eines Kreisförderers montiert ist, der kontinuierlich um seine Achse angetrieben wird, wobei die Blasform zyklisch nach einem Formungszyklus funktioniert, umfassend die folgenden Schritte:
- einen Schritt der Anordnung eines vorher erhitzten Rohlings in einer Blasform, die in Verschlussposition einen Formungshohlraum aufweist, der den Abdruck des zu blasenden Behälters bildet,
- einen Schritt des Verschließens der Blasform,
- einen Schritt des Blasens des Rohlings in der Blasform mit Hilfe eines Blasrohrs auf im Wesentlichen gleichzeitige Weise,
- einen Schritt des Streckens des Rohlings durch Einsetzen einer Verlängerungsstange in das Innere des Rohlings, wobei sie am Boden des Rohlings zur Anlage gelangt, um die Axialverlängerung des Rohlings zu vereinfachen,
- einen Schritt des Abtastens des Inneren des Behälters durch Einleiten von Luft während einer gegebenen Zeit Tb,
- einen Schritt des Anhebens der Streckstange,
- einen Schritt des Erfassens des geblasenen Behälters durch äußere Greifmittel,
- einen Schritt des Öffnens der Blasform,
**dadurch gekennzeichnet, dass** es darin besteht, in dem Formungszyklus der Behälter zu jedem Produktionsstart der Behälter eine so genannte "Ausgleichsperiode" einzuführen, während der die Dauer des Abtastschrittes automatisch und vorübergehend variiert, um im Bereich der Behälter thermische Bedingungen zu schaffen, die es ermöglichen, die ersten Behälter bei einer Temperatur zu formen, die ihnen ein Endvolumen verleiht, das dem Endvolumen der Behälter entspricht, die während des Kreuzbetriebs der Streck-Blas-Maschine geformt wurden, d.h. der Produktionsperiode, während der die Temperatur der Formen stabilisiert ist.

2. Verfahren zur Formung von Behältern nach Anspruch 1, **dadurch gekennzeichnet, dass** es einen Schritt der Festlegung eines Wertes der Abtastzeit Td, die für die erste Umdrehung des Kreisförderers der Blasmaschine verwendet wird.

3. Verfahren zur Formung von Behältern nach einem der Ansprüche 1 oder 2, **dadurch gekennzeichnet, dass** es einen Schritt der Festlegung der Dauer Tc der Ausgleichsperiode umfasst.

4. Verfahren zur Formung von Behältern nach Anspruch 3, **dadurch gekennzeichnet, dass** es einen Schritt der Programmierung der Variation der Abtastzeit Tb während der Ausgleichsperiode Tc nach einer Funktion ersten Grades des Typs Tb=A.t+Td umfasst, wenn t≤Tc, wobei A ein Koeffizient der Ordnung +/-0,0003 bis +/-0,0006 ist, und dann, wenn t>tc, die Abtastzeit Tb der Behälter konstant ist: Tb=A.Tc+Td.

5. Verfahren zur Formung von Behältern nach Anspruch 4, **dadurch gekennzeichnet, dass** der Koeffizient A positiv oder negativ ist, in Abhängigkeit davon, ob die Temperatur der Formen zu Beginn steigend bzw. fallend ist.

6. Verfahren zur Formung von Behältern nach Anspruch 5, **dadurch gekennzeichnet, dass** es einen Schritt der Programmierung des Variationsmodus der Ausgleichszeit umfasst, wobei dieser Modus in einer Inkrementalvariation, die für jede Umdrehung des Kreisförderers angewandt wird, besteht.

7. Streck-Blas-Maschine, die für den Einsatz des Verfahrens zur Formung von Behältern nach einem der Ansprüche 1 bis 6 geeignet ist, insbesondere Maschine drehbaren Typs, umfassend mindestens eine Blasform, die an der Peripherie eines Kreisförderers angeordnet ist, der kontinuierlich um seine Achse angetrieben wird, wobei die Blasform zyklisch funktioniert, wobei die Maschine einen Steuer- und Programmierautomaten für die Zyklen zur Formung der Behälter umfasst, der mit Programmiermitteln versehen ist,
**dadurch gekennzeichnet, dass** der Automat Mittel zum Eingeben folgender Daten umfasst: der Abtastzeit Td, die der stabilisierten Produktionsperiode der Behälter entspricht, der vorübergehenden Ausgleichszeit Tc, die dem Beginn der Produktion der Behälter entspricht, und eines Koeffizienten A, wobei die Daten der automatischen und vorübergehenden Erstellung des Werts der Abtastzeit Tb entsprechen, wobei der Wert Tb der Anwendung einer Gleichung des Typs Tb=A.Tc+Td entspricht.

8. Blas-Streck-Maschine nach Anspruch 7, **dadurch gekennzeichnet, dass** der Koeffizient A +/-0,0003 bis +/-0,0006 beträgt.

9. Blas-Streck-Maschine nach Anspruch 7, **dadurch gekennzeichnet, dass** die Ausgleichszeit Tc 2 bis 3 min beträgt.

10. Blas-Streck-Maschine nach einem der Ansprüche 6 bis 9, **dadurch gekennzeichnet, dass** sie Mittel umfasst, um automatisch im Bereich des Automaten die Abtastzeit Tb während der Ausgleichszeit Tc im Inkrementalmodus bei jeder Umdrehung des Kreisförderers der Maschine zu variieren.
